# EUROPEAN PATENT SPECIFICATION

(11) **EP 4 590 515 B1**
(45) Date of publication and mention of the grant of the patent: **29.04.2026**
(21) Application number: 22786737.1
(22) Date of filing: 20.09.2022
(51) Int. Cl.: B41J 2/21, B41J 19/14, G06K 15/02, G06K 15/10

(54) **COMMUNICATION OF DIGITAL REPRESENTATIONS TO NOZZLE SETS**
KOMMUNIKATION VON DIGITALEN DARSTELLUNGEN ZU DÜSENSÄTZEN
COMMUNICATION DE REPRÉSENTATIONS NUMÉRIQUES À DES ENSEMBLES DE BUSES

(43) Date of publication of application: 30.07.2025
(73) Proprietor: Hewlett-Packard Development Company, L.P., Spring TX 77389 (US)
(72) Inventor: SERRA MONNER, Albert, 08174 Sant Cugat del Valles Barcelona (ES); PETRE, Benoit, 08174 Sant Cugat del Valles Barcelona (ES); CASANOVAS SURIOL, Selma, 08174 Sant Cugat del Valles Barcelona (ES)
(74) Representative: Plasseraud IP
(86) International application number: PCT/US2022/076720
(87) International publication number: WO 2024/063799

(56) References cited:
- US-A1- 2006 125 866
- US-A1- 2011 057 976
- US-A1- 2013 162 710
- US-A1- 2020 276 838

## Description

### BACKGROUND

Digital representation data may be processed by controllers of printers into print data in order to control nozzles ejecting a printing fluid on a printing media to produce a tangible printed representation of the digital representation data.

Processing of representation data into print data may differ from printer to printer, for example in order to adapt such print data to a specific printer architecture or to specific printing fluid sets.

The document US 2006/125866 A1 discloses a conventional printer and a conventional printing method.

### BRIEF DESCRIPTION OF THE DRAWINGS

FIG. 1 illustrates an example method.
FIG. 2A-D illustrate example dies.
FIG. 3 illustrates another example method.
FIG. 4 illustrates another example method.
FIG. 5 illustrates another example method.
FIG. 6 illustrates another example method.
FIG. 7 illustrates another example method.
FIG. 8 illustrates another example method.
FIG. 9 illustrates an example printer and an example non-transitory machine-readable storage medium.
FIG. 10 illustrates another example printer and example non-transitory machine-readable storage medium.
FIG. 11 illustrates another example printer and example non-transitory machine-readable storage medium.
FIG. 12 illustrates another example printer and example non-transitory machine-readable storage medium.
FIG. 13 illustrates another example printer and example non-transitory machine-readable storage medium.

### DETAILED DESCRIPTION

While different digital representations or images may be printed on respective different media surfaces independently from each other, in some cases different representations are to be printed on a same media surface, specifically on a same side of a same media. Such printing of different representations on a same side of a same media can produce a desired visual effect. An example of such a desired visual effect is obtained when printing the different representations on a same side of a same transparent media, permitting visualizing a first representation from one side of the media and a second representation from the other side of the media, such second representation being in this case located for example between the first representation and the transparent media. Another example of a desired visual effect is obtained when printing the different representations on a same side of a same translucent media, whereby a change in light intensity shining through the media renders one of the representations more or less visible compared to another for an observer, whereby the media is placed between the observer and a light source shining through the media. Another example can permit producing artistical effects through an optical interaction between the different digital representations. Yet another example can permit compensating printing quality defects by optical interaction between the different digital representations. Building a capability for printing different representations on a same side of a same media forms the foundation of the present disclosure.

As will be exemplified in more details in the present disclosure, this capability can be built through the use of a same die ejecting a same printing fluid on the same side of a same media, doing so concurrently in a same swath or pass for a first and a second digital representation.

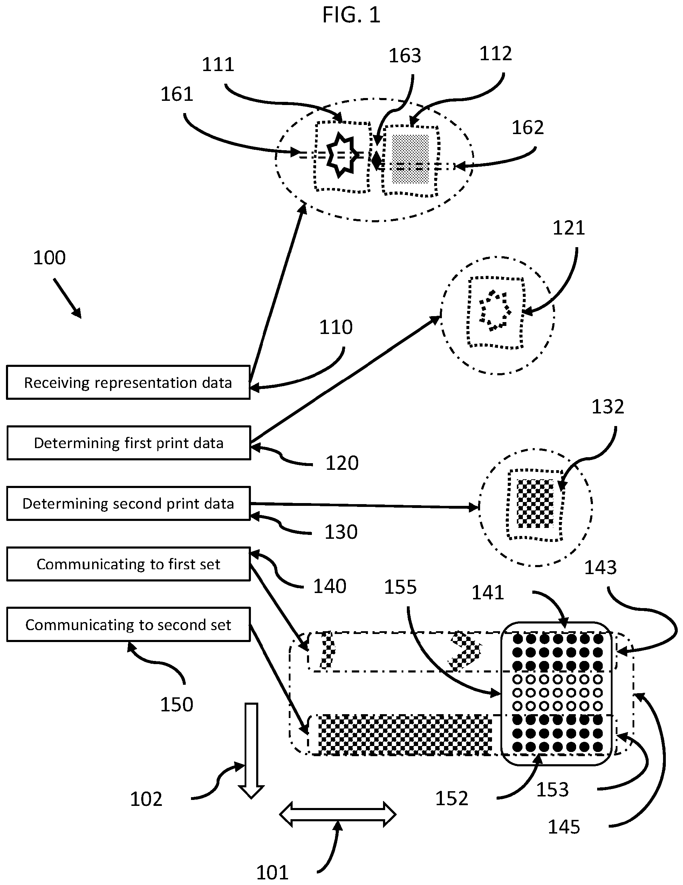

Figure 1 illustrates an example printing method 100. Printing method 100 comprises, in block 110, receiving first 111 and second 112 digital representation data for a first and a second digital representation to be printed on a same side of a same media. In Figures 1 and 3 to 13 some blocks are linked to a diagram schematically illustrating the related block.

The receiving of the data may take place in some examples by way of a wired or wireless network interface comprised in a printer controller to receive print job data. Example printer controllers will be described in more details below. In some examples, data may be provided and received locally, for example through a connector integrated in a printer.

The terminology "first" and "second" as applied to digital representations or to other features should, in this disclosure, and unless stated otherwise, merely be understood as labels assigned to the features concerned, similarly to digital representations "A" and "B" for example, without referring to a specific order (both representation may for example be received one after the other, in any order, or may be received, partially or completely, concurrently).

Digital representation data for a digital representation should be understood as digital data for example in the form of a data file, such data file corresponding to a graphical representation to be printed. Example data formats are PDF, EPS, JPG, TIFF, GIF, PNG or ZIP formats. Example digital representations are static images, photographs, text, graphics or a mixture of these. Digital representation may be two dimensional (2D) or three dimensional (3D) digital representations.

In some examples, the receiving of first and of second digital representation data for a first and a second digital representation comprises receiving respective different data files, whereby the first digital representation corresponds to a first data file and the second digital representation to a second data file differing from the first data file. Such different file may have different data formats, or may have a same data format.

Media should be understood as a medium configured to receive a printing fluid in order to display a tangible representation of a digital representation. The media on which printing takes place may take different forms, be made of different materials, and have different adhesion properties, porosities, roughness or compositions. In some examples, the media is in the form of a flexible sheet. In some examples the media is in the form of a rigid board. The media may be provided as a precut sheet or as a roll. In some examples, the media comprises cellulose based fiber such as paper or cardboard. In some examples the media comprises wood. In some examples the media comprises textile. The media may be in some examples a woven or non-woven textile media. In some examples the media comprises metal. In some examples the media comprises glass. In some examples the media comprises leather. In some examples, the media comprises a plastic resin or a transparent plastic resin or polymer such as Poly(methyl methacrylate), PMMA, or Polyvinyl chloride, PVC, for example. In some examples, the media comprises a mixture of such materials. The media may be a laminate.

In some examples, the media is a generally two dimensional media having a width, a length and a thickness, the thickness being very significantly smaller than both of the width and the length, the thickness being for example of less than 100 times either of the length or width. In other examples, media may take a generally three dimensional shape. In some examples, the printing media may be a 3D build material, for example in a powder form, whereby the printing fluid may be a reactant or binder applied layer by layer onto the 3D build material to form, by fusing or bonding of the 3D build material, a tangible 3D object corresponding to the digital representations, the digital representations being 3D digital representations in such examples, the same side of the media corresponding to the layer 3D build material facing the nozzles as they eject the printing fluid. The build material itself may be deposited layer by layer by other mechanisms not described here in detail.

Printing the first and the second representations on a same side of a same media should be understood in that at least part of the first representation and at least part of the second representation will overlap, be superposed or intermixed on a same surface portion of the media. In the case of a generally two dimensional media having a width, a length and a thickness, the media should be considered as comprising two sides separated by the media thickness. In the case of a generally three dimensional media, more than two sides may be available for printing. A side of the media other than the same side on which the first and second digital representations are to be printed may be virgin or may carry another printed digital representation for example.

Printing method 100 comprises, in block 120, determining first print data 121 corresponding to a first printing fluid for the first digital representation on the basis of the first digital representation data 111.

Digital representation data may be processed to obtain, for example, data or data pointers leading to emitting electrical control signals permitting to fire or eject printing fluid onto a media using nozzles of a printhead. The data may correspond to digital data at one of different stages of a printing pipeline, upstream or downstream from such printing pipeline. The data may be one of digital data corresponding to a resulting graphical representation to be printed, digital data following a rasterizing process, digital data following a halftoning process, digital data following a masking process, or digital data directly controlling electronic signals of piezo or resistor based ejecting chambers of nozzles of the printhead. Print data according to this disclosure is data derived from the digital representation data and corresponding to a specific printing fluid. Determining print data corresponding to a printing fluid for a digital representation on the basis of the digital representation data may comprise one or more of a rasterizing, halftoning or masking process. In some examples, digital representation data comprises data which may be associated to multiple different colors, while derived print data will for example be limited to printing fluid being a black ink in order to produce a black and white, or grey scale, printed representation of the multicolor digital representation data. In some examples, digital representation data comprises data associated to multiple different colors, while derived print data will for example be limited to a printing fluid being one of Cyan, Magenta, Yellow or blacK ink in order to produce a multicolor printed representation of the multicolor digital representation data. In Figure 1, the star-like representation 121 corresponding to the print data is represented in dashed lines instead of the full line representation 111 to illustrate the fact that the print data may in some examples correspond to a color component (say, for example, the cyan component), of a complete representation which would result from applying several different such color components (Cyan, Magenta, Yellow and blacK for example). One should note that in some examples, the complete representation may be obtained from a single printing fluid (for example a black and white representation), in which case the print data 121 may appear very similar or equal to representation data 111. In some examples, a printing fluid is a colored ink. In some examples, a printing fluid is a latex based ink, which is particularly suited for printing on different media and may be suitable to being exposed to external weather and changing lighting conditions generated visual effects. In other examples, the printing fluid may be a non-marking fluid such as, e.g., an overcoat, a fixer, pretreatment or post treatment fluids which may be transparent or translucent and serve to prepare a media for receiving an ink, or serve to fix an ink onto the media.

Printing method 100 comprises, in block 130, determining second print data 132 corresponding to the first printing fluid for the second digital representation on the basis of the second digital representation data. It should be understood that while the first and second print data relate to different digital representations, they are associated to a same printing fluid, for example to a same color. Such same printing fluid may for example be extracted from a same printing fluid reservoir. Such same printing fluid may alternatively be extracted from different reservoirs, the same printing fluid from such different reservoirs having a same composition. In the representation of Figure 1, as explained in the context of 111 and 121 of the first print data, the second print data 132 is illustrated as corresponding to a single printing fluid, i.e. a single component of the corresponding complete digital representation data 112.

Printing method 100 comprises, in block 140, communicating the first print data 121 corresponding to a specific swath 145 to a first set of nozzles 141 fluidically connected to the first printing fluid. The communication may comprise sending electronic signals through an electronic circuit connecting the nozzles to a printer controller.

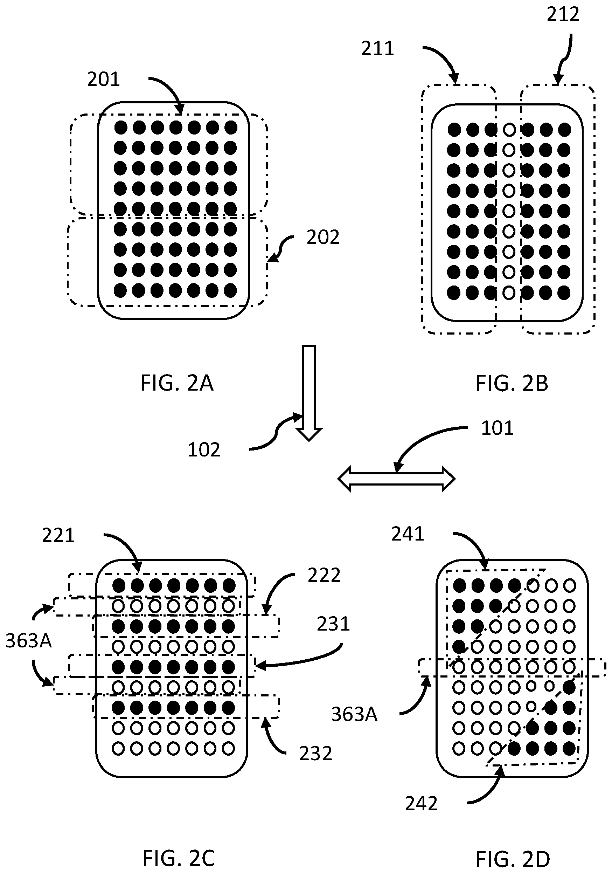

A swath such as illustrated swath 145, illustrated by an area surrounded by "dot-dashed" lines, should be understood as a pass of a printhead over a strip shaped area of the media, the printhead ejecting printing fluid on the media through printhead nozzles during such pass. During a swath, a printhead of the printer may travel along a printhead carriage axis 101, the carriage carrying the printhead or being comprised in the printhead, as printing fluid is ejected, the media remaining static during the travelling of the printhead producing the swath. A digital representation results in some examples from printing successive swaths, the swaths being parallel to each other and parallel to a printhead traveling direction. In some examples, while the media remains static during each swath, the media is advanced by a media advance amount between successive swaths in order to progressively print the complete digital representation. In some example print modes, for example using a die configuration as illustrated in Figure 2B, such media advance amount is equal to a swath height, the swath height corresponding to a width of the swath along a media advance direction 102, whereby a given location on a surface of the media facing the printhead would "see" the printhead pass a single time during the printing operation concerned, such print modes permitting reaching a high printing speed. One should note that the media advance direction should be understood relatively speaking, either as media advances with a static printhead axis, or as media remains static with a movable printhead axis in a direction opposite to the media advance direction, or as a combination of both. In other example print modes, the media advance amount is of less than a swath height, whereby a given location on a surface of the media facing the printhead would "see" the printhead pass multiple times during the printing operation concerned, such so called "multipass" print modes permitting for example reaching a desired printing quality. In some examples, as a printhead reciprocates along a printhead carriage axis such as axis 101 during printing, a printing swath takes place along a single same direction, for example from left to right or from right to left, the printhead reciprocating without printing along the direction opposite to the single same direction. In some examples, as a printhead reciprocates along a printhead carriage axis such as axis 101 during printing, a printing swath takes place along both directions, for example both from left to right and from right to left. One should note that while the media advance direction 102 is illustrated as generally perpendicular to the printhead traveling or scanning axis 101, other configurations may be considered at other non-zero angles.

In block 140, the first print data 121 corresponding to the specific swath 145 is communicated to a first set 141 of nozzles fluidically connected to the first printing fluid. The first print data corresponding to a specific swath should generally be understood as corresponding to a stripe 161 being a subset of the first digital representation, except in a situation whereby the entire first digital representation corresponding to the first printing fluid may be printed by the first set of nozzles in a single swath. In the example illustrated in Figure 1, while the first digital representation has a star-like shape, illustrated swath 145 leads to printing a central portion 161 of the star-like shape. It should be understood that other portions of the star-like shape may have been printed before, not being illustrated here. One should note that the width printed by the first set of nozzles along a direction perpendicular to a printhead travelling direction 101 corresponds to a width of the first set of nozzles along this direction, whereby such width of the first set of nozzles is at most corresponding to the swath height. Such width of the first set of nozzles may be considered a first set swath height.

In Figure 1, the first set of nozzles is illustrated as black disks comprised in area 143 surrounded by a "dot-dashed" line encompassing the first set of nozzles and the resulting print corresponding to swath 145. This configuration is for illustration purposes, and example sets may for example comprise hundreds or thousands of nozzles per set. In Figure 1, the first set of nozzles forms a single group of nozzles located towards a first end of a die carrying the nozzle. A die will be discussed in more details below. Other groupings or locations of nozzles may be chosen to form the first set of nozzles, as will be discussed further below.

The first set of nozzles is fluidically connected to the first printing fluid, whereby the first printing fluid may flow from a printing fluid reservoir to the nozzles comprised in the first set through fluid channels or trenches.

Printing method 100 comprises, in block 150, communicating the second print data 132 corresponding to the specific swath 145 to a second set 152 of nozzles fluidically connected to the first printing fluid, whereby the first and the second set of nozzles 141 and 152 are disjoint sets of nozzles from a same first die.

The second print data corresponding to the specific swath should generally be understood as corresponding to a stripe 162 being a subset of the second digital representation, except in a situation whereby the entire second digital representation corresponding to the first printing fluid may be printed by the second set of nozzles in a single swath. In the example illustrated in Figure 1, while the second digital representation has a portrait-like shape, illustrated swath 145 leads to printing a stripe 162 of the portrait-like shape, i.e. a portion of the portrait-like shape. One should note that the width printed by the second set of nozzles along a direction perpendicular to a printhead travelling direction 101 corresponds to a width of the second set of nozzles along this direction, whereby such width of the second set of nozzles is at most corresponding to the swath height. A swath height 163 corresponds to a swath height of swath 145 which, in this example, comprises both stripes 161 and 162 which do not overlap. On should note that this configuration would be different for example if using a die as represented in Figure 2B as will be explained in more detail below.

In some examples, a width of the first set of nozzles along a direction perpendicular to a printhead travelling direction corresponds to a first set swath height, a width of the second set of nozzles along a direction perpendicular to a printhead travelling direction corresponds to a second set swath height, whereby the first and second swath height do not overlap, and whereby a sum of the first and second swath height is less than or equal to a complete swath height 163 of the die.

In Figure 1, the second set of nozzles is illustrated as black disks comprised in area 153 surrounded by a "dot-dashed" line encompassing the second set 152 of nozzles and the resulting print corresponding to swath 145. Again, this configuration is for illustration purposes, and example sets may for example comprise hundreds or thousands of nozzles per set. In Figure 1, the second set of nozzles forms a single group of nozzles located towards a second end of a die carrying the nozzles and opposite to the first end of the die where the first set 141 of nozzles is located. Again, other groupings or locations of nozzles may be chosen to form the second set of nozzles, as will be discussed further below.

The second set of nozzles is fluidically connected to the first printing fluid, whereby the first printing fluid may flow from a printing fluid reservoir to the nozzles comprised in the second set through fluid channels or trenches.

The first and the second set of nozzles 141 and 152 are disjoint sets of nozzles. Disjoint sets should be understood in that nozzles comprised in such sets pertain either to the first or to the second set. In other words, a super set comprising all nozzles from disjoint sets would comprise a total number of nozzles equal to a sum of the nozzles of each of the disjoint sets.

The first and the second set of nozzles 141 and 152 are from a same first die 155. A die should be understood as a monolithic body or single piece of material in which the nozzles are formed. A die may comprise nozzles, fluid chambers and trenches. A die may comprise a monolithic silicon substrate. A die may be comprised in a layered architecture comprising elements such as fluid ports and resistive or piezo elements to form a printhead. While a printhead may comprise a plurality of different dies, the first and the second set of nozzles 141 and 152 are from a same first die. The first die may comprise nozzles which neither pertain to the first set nor to the second set of nozzles, such as the nozzles illustrated by white disks between sets 141 and 152 in Figure 1.

Such an example configuration, as well as other example configurations hereby described, offers a capability for printing different representations on a same side of a same media, and to do so using a limited number of dies,, for example a single die per printing fluid type, thereby permitting leveraging for example an existing printer base to obtain the desired visual effects in an efficient manner.

Figures 2A-D illustrates different example configurations of first and second nozzle sets according to example methods, printers or non-transitory machine-readable storage media hereby described. As mentioned above, it should be understood that such configurations are for illustration purposes, and example sets may for example comprise hundreds or thousands of nozzles per set.

In Figure 2A, the first set of nozzles 201 forms a single group of nozzles located towards a first end of a die carrying the nozzles, and the second set of nozzles 202 forms a single group of nozzles located towards a second end of the die opposite to the first end. The first and second ends are in this example opposite along a media advance direction 102, whereby a leading edge of a media would first pass across the first set of nozzle, and then pass across the second set of nozzles. In this example, the sets are separated along a line parallel to a printhead carriage axis 101. Such a configuration would for example facilitate printing on a given portion of a surface of the media using the first set prior to printing using the second set on the same given portion in a following swath. In this example, the first and the second sets of nozzles comprise a different number of nozzles. In this example, all nozzles of the die are either comprised in the first set or in the second set.

In Figure 2B, the first set of nozzles 211 forms a single group of nozzles located towards a first side of a die carrying the nozzles, and the second set of nozzles 212 forms a single group of nozzles located towards a second side of the die opposite to the first side. The first and second sides are in this example opposite along a printhead carriage axis 101, whereby one may print onto a specific surface portion of media first using the first set and then using the second set as the die moves along producing the specific swath, or whereby one may print onto a specific surface of media first using the second set and then using the first set as the die moves along producing the specific swath, depending on the direction of movement of the die onto the media. In this example, the sets are separated along a line parallel to a media advance direction 102. Such a configuration would for example provide for a printing of broad stripes using both sets, whereby each of the first and second set swath height may correspond a swath height of the die itself. In this example, the first and the second sets of nozzles comprise a same number of nozzles. In this example, some nozzles of the die, illustrated in white, are neither comprised in the first set nor in the second set.

In Figure 2C, the first set of nozzles comprises subsets 221 and 231 forming a plurality of groups of nozzles interleaved with a second set of nozzles comprising subsets 222 and 232. The interleaving in this example is in the direction 102, each group or subset of nozzles from a given set being separated by another group or subset of the same given set by at least one group or subset of another set. Such a configuration permits printing, in a same swath, different stripes of each of the digital representations (in this illustrated example, two stripes for each of the first and second representations).

In Figure 2D, the first set of nozzles 241 forms a single group of nozzles located towards a first side and a first end of a die carrying the nozzles, and the second set of nozzles 242 forms a single group of nozzles located towards a second side and a second end of the die opposite to the first side and to the first end. The first and second sides are in this example opposite along a printhead carriage axis 101, whereby one may print onto a specific surface of media first using the first set and then using the second set, or whereby one may print onto a specific surface of media first using the second set and then using the first set, depending on the direction of movement of the die onto the media. The first and second ends are in this example opposite along a media advance direction 102, whereby a leading edge of a media would first pass across the first set of nozzle, and then pass across the second set of nozzles. In this example, the sets are separated by nozzles illustrated in white. Such a configuration would for example provide for increasing a time between printing on a given portion of surface of the media with the first set prior to printing on the same given portion with the second set, for example by restricting printing to movement of the die from right to left relative to the axis 101.

Numerous other configurations may be considered which are not illustrated here.

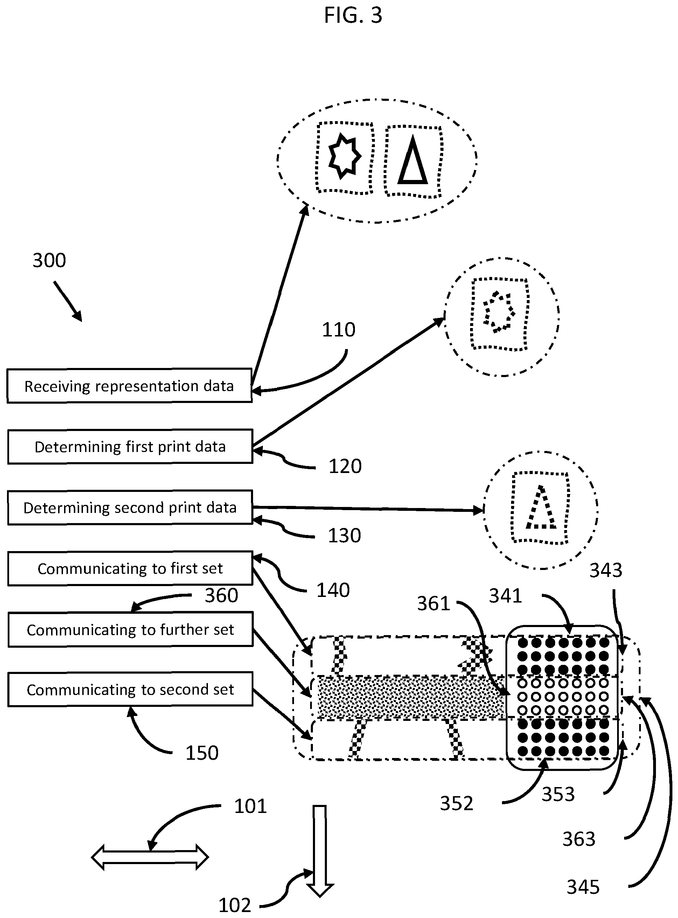

Figure 3 illustrates another example method 300 which comprises blocks 110, 120, 130, 140 and 150 as described in the context of Figure 1.

One should note that some reference numerals are not carried over from Figure to Figure in the present description in order to improve legibility.

Method 300 comprises communicating, as per block 140, the first print data corresponding to a specific swath 345 to a first set of nozzles 341 fluidically connected to the first printing fluid, and communicating, as per block 150, the second print data corresponding to the specific swath 345 to a second set of nozzles 352 fluidically connected to the first printing fluid, whereby the first and the second set of nozzles are disjoint sets of nozzles from a same first die. In this figure, the first set of nozzles is illustrated as black disks comprised in area 343 surrounded by a "dot-dashed" line encompassing the first set of nozzles and the resulting print corresponding to swath 345. In this figure, the second set of nozzles is illustrated as black disks comprised in area 353 surrounded by a "dot-dashed" line encompassing the second set of nozzles and the resulting print corresponding to swath 345.

Method 300 further comprises block 360 of communicating intermediate print data corresponding to the specific swath 345 to a further set of nozzles 361 fluidically connected to an intermediate printing fluid differing from the first printing fluid, whereby the intermediate print data corresponds to a layer to be printed between the first and second digital representations. In this figure, the further set of nozzles is illustrated as white disks comprised in area 363 surrounded by a "dot-dashed" line encompassing the second set of nozzles and the resulting print corresponding to swath 345.

In some examples, the intermediate print data is associated to a digital representation provided in the form of a data file as discussed above in the context of the first and second representation data. In some examples, the intermediate print data is, for example, default screen data or data stored on storage of a printer controller which does not necessarily correspond to a digital representation.

The intermediate print data corresponds to a layer to be printed between the first and second digital representations. Such printing between the first and the second digital representation implies that a given portion of a surface of the media would first be printed on by, for example, the first set of nozzles, then by the further set of nozzles, then by the second set of nozzles, the layer printed by the further set of nozzles being taken in sandwich by a first layer printed by the first set of nozzles and by a second layer printed by the second set of nozzles. In some examples, the printing of such successive layers on such given portion of surface of media takes place in different successive swaths, as illustrated for example in the die configuration of Figure 3, whereby, for example, a media advance corresponding to one nozzle, two nozzles or to three nozzles along media advance 102 would result in printing, in multiple passes, the different layers separated by one or more passes or swaths. As mentioned earlier in the description, while 3 lines of nozzles are illustrated here for each nozzle set along the printhead carriage axis 101, each nozzle set may in examples comprise hundreds or thousands of such lines.

Such printing of successive layers on such given portion of surface of media in different successive swaths may also be obtained in the die configurations of Figures 2C or 2D, the further set of nozzles corresponding for example to set 363A. In such illustrated examples, the media advance between swaths should be of no less than a threshold width of a set of nozzles along the media advance direction, whereby the threshold width corresponds to the width along the media advance direction of the narrowest set or subset of nozzles of the first, second or further sets of nozzles along the media advance direction. In the specific example of Figure 2D, in case of a media advance of a single nozzle, a given portion of media having a single nozzle width would "see" a nozzle from the first set 10 times in 4 passes (4, then 3, then 2, then 1), a nozzle from the further set 7 times in a single pass or swath, and a nozzle from the second set 10 times in 4 passes (1, then 2, then 3, then 4).

Printing on successive layers leading to printing intermediate print data corresponding to a layer to be printed between the first and second digital representations as per block 360 may also be obtained by printing such successive layers in a single swath, the separation occurring through travel of the die along the printhead carriage axis 101. This may for example be obtained using the die illustrated in Figure 2B, whereby the further set of nozzles corresponds to the nozzles in white, whereby a die travelling from right to left will, on a given media surface portion, print using the first, further and second sets of nozzles in this order.

Printing on successive layers leading to printing intermediate print data corresponding to a layer to be printed between the first and second digital representations as per block 360 may also be obtained by printing such successive layers separated by a combination of being printed successively layer by layer in different swath or within a same swath, for example using all white nozzles of Figure 2D as further set.

One should note that numerous other nozzle set combinations may be designed in order to obtain the layer to be printed between the first and second digital representations as per 360, for example by using one or more further set or subset of the further set of nozzles separating one or more of the first and second set or subsets the first and second set of nozzles. In some examples, the intermediate printing fluid may act as a screening fluid, such screening fluid acting as an optical filter between the first and the second representations. In some examples, the intermediate printing fluid forms an opaque layer between the first and the second representations, such that the use of a transparent or translucent printing media would result in viewing the first representation from one side and the second representation from the other side of such media. In some examples, the intermediate printing fluid forms a translucent layer between the first and the second representations, such that the use of a transparent or translucent printing media would result in viewing some mix of the first representation and second representation from one side and another different mix of the first and second representation from the other side of such media, whereby such mixes may be a function of lightning conditions.. In some examples, the intermediate printing fluid is a white ink.

In some examples, a width of the first set of nozzles along a direction perpendicular to a printhead travelling direction corresponds to a first set swath height, a width of the second set of nozzles along a direction perpendicular to a printhead travelling direction corresponds to a second set swath height, and a width of the further set of nozzles along a direction perpendicular to a printhead travelling direction corresponds to a further set swath, whereby the first, second and further swath height do not overlap, whereby the first, further and second swath height are placed in this order, and whereby a sum of the first, further and second swath height is less than or equal to a complete swath height of the die.

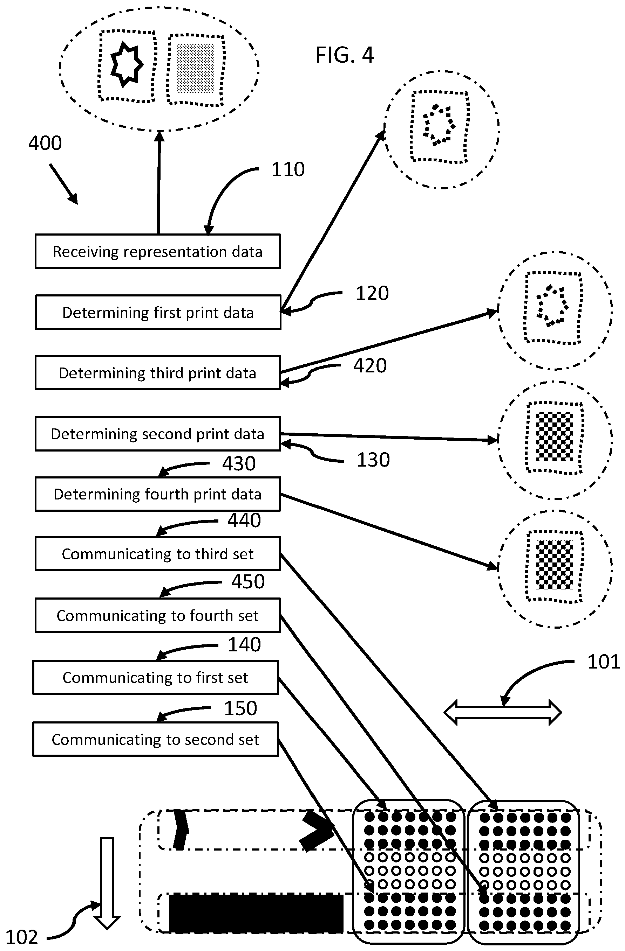

Figure 4 illustrates a further example printing method 400. Printing method 400 comprises blocks 110, 120, 130, 140 and 150 described in the context of Figure 1. While not illustrated here, method 400 could further comprise block 360 described in the context of Figure 3.

Printing method 400 further comprises block 420 of determining third print data corresponding to a second printing fluid for the first digital representation on the basis of the first digital representation data, whereby the second printing fluid differs from the first printing fluid, block 430 of determining fourth print data corresponding to the second printing fluid for the second digital representation on the basis of the second digital representation data, block 440 of communicating the third print data corresponding to the specific swath to a third set of nozzles fluidically connected to the second printing fluid, and block 450 of communicating the fourth print data corresponding to the specific swath to a fourth set of nozzles fluidically connected to the second printing fluid, whereby the third and the fourth set of nozzles are disjoint sets of nozzles from a same second die.

In some examples, the first fluid and the second fluid pertain to a same ink set, the ink set permitting reproducing a multicolor representation based on the inks from the ink set. An example ink set comprises Cyan, Magenta and Yellow. An example ink set comprises Cyan, Magenta, Yellow and blacK. Other colors may be considered, for example in order to increase a color palette or in order to obtain desired visual effects. Example of such colors include but are not limited to orange, green, light cyan, light magenta, light yellow, grey, dark grey, light grey, metallic gold, metallic silver or white. While example method 400 introduces a second printing fluid different from the first printing fluid, further example methods not illustrated here may comprise yet further different printing fluid respectively associated with further nozzle sets in order to enrich the palette of a resulting printed representation.

In illustrated example method 400, while the first die comprises the first and the second nozzle sets fluidically connected to the first printing fluid, a second die is provided which comprises the third and fourth sets fluidically connected to the second printing fluid. In some other examples, the first, second, third and fourth sets may be disjoint sets on a same die, such die for example comprising different trenches or channels permitting feeding different fluids to different nozzle sets. The operation of blocks 420, 430, 440 and 450 corresponds, respectively, to the operation of blocks 120, 130, 140 and 150, with a same first and same second digital representation data, a same media, a same specific swath, but different printing fluids. The resulting print thereby comprises a combination of the first and second printing fluids.

In some examples, method 400 further comprises block 360 of Figure 3, whereby the same intermediate printing fluid is fed to both the first and the second die.

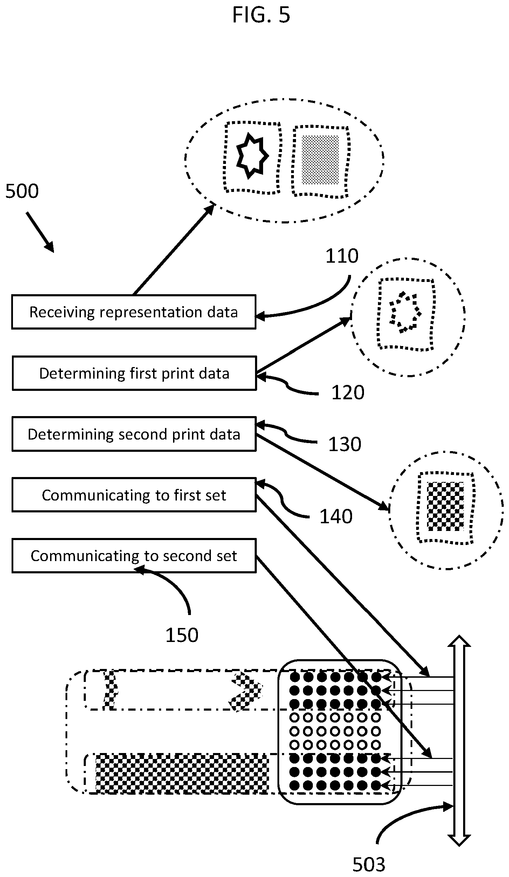

Figure 5 illustrates a further example printing method 500. Printing method 500 comprises blocks 110, 120, 130, 140 and 150 described in the context of Figure 1. While not illustrated here, method 500 could further comprise block 360 described in the context of Figure 3. While not illustrated here, method 500 could further comprise blocks 420, 430, 440 and 450 described in the context of Figure 4.

Printing method 500 further comprises communicating the first and second print data corresponding to blocks 140 and 150 using a same communication bus 503. The communication bus should be understood as a communication bus connecting the die to a printer controller which may operate according to an example method hereby described. The communication bus may be connected to the die through electronic circuitry. Using a same communication bus permits obtaining an efficient design using a same bus to transmit data related to both the first and the second representation. Such a bus may transmit other data such as, for example data of a further set as described in Figure 3. Such a bus may transmit other data such as, for example data of a third, fourth or further sets as described in Figure 4.

In some examples, nozzle sets according to this disclosure are treated by a controller of a printer as electronically addressable independently from each other. In some examples, each nozzle set is electronically driven by the controller of the printer using a respective halftone color plane, such halftone color plane corresponding to a respective one of the digital representations for a same printing fluid.

In some examples, compared to printing a single digital representation using a single die and a same printing fluid, whereby data pointers for nozzles of a die would span a substantially complete die swath height, some example methods according to this disclosure lead to selectively assigning data pointers to the nozzles on a set by set basis corresponding to respective digital representations, effectively reducing swath height for each digital representation compared to printing a single digital representation using a single die (for example in nozzle set configurations illustrated in Figures 1, 2A, 2C and 2D) and a same printing fluid, whereby remaining data pointers may be set as input for halftone planes corresponding to further swaths.

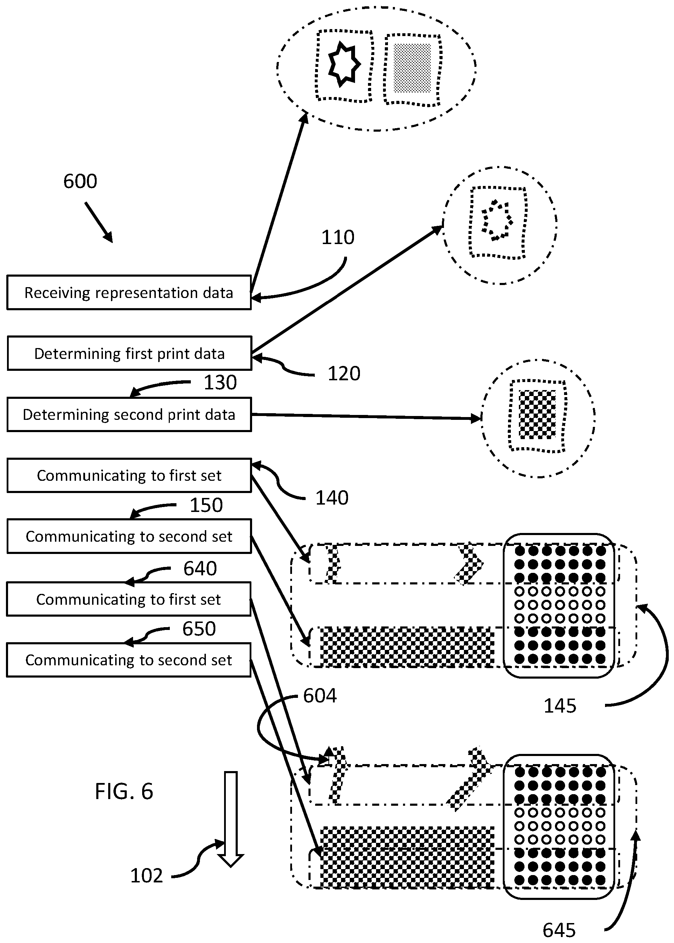

Figure 6 illustrates a further example printing method 600. Printing method 600 comprises blocks 110, 120, 130, 140 and 150 described in the context of Figure 1. While not illustrated here, method 600 could further comprise block 360 described in the context of Figure 3. While not illustrated here, method 600 could further comprise blocks 420, 430, 440 and 450 described in the context of Figure 4. While not illustrated here, method 600 could be operated using a bus such as bus 503 of Figure 5.

Printing method 600 further comprises, in block 640, communicating the first print data corresponding to a further specific swath 645 to the first set of nozzles and, in block 650, communicating the second print data corresponding to the further specific swath 645 to the second set of nozzles. In this representation, the further specific swath 645 is represented as closely following the specific swath 145, the media having advanced between swath 145 and 645 in the media advance direction of a distance 604 of about a sixth of the complete swath height f die 155. In other examples, a distance between the further specific swath and the specific swath may be different and may vary over time, for example in function of a desired image quality. In some examples, the further specific swath directly follows the specific swath. In other examples, one or more swaths take place between the specific swath and the further specific swath. In some examples, the specific swath and the further specific swath are along a same direction. In some examples, the specific swath and the further specific swath are along opposite directions.

In Figure 6, the same first die is represented twice, on the top representing the print data corresponding to the specific swath 145, on the bottom representing the print data corresponding to the further specific swath 645, in addition to the result of printing the specific swath 145 and following a displacement 604 of the media along direction 102 between the swaths 145 and 645.

As illustrated in Figure 6, the specific swath and the further specific swath operate using the same first and second sets of nozzles. Additional swaths may be added in this manner in order to complete the first and second digital representations.

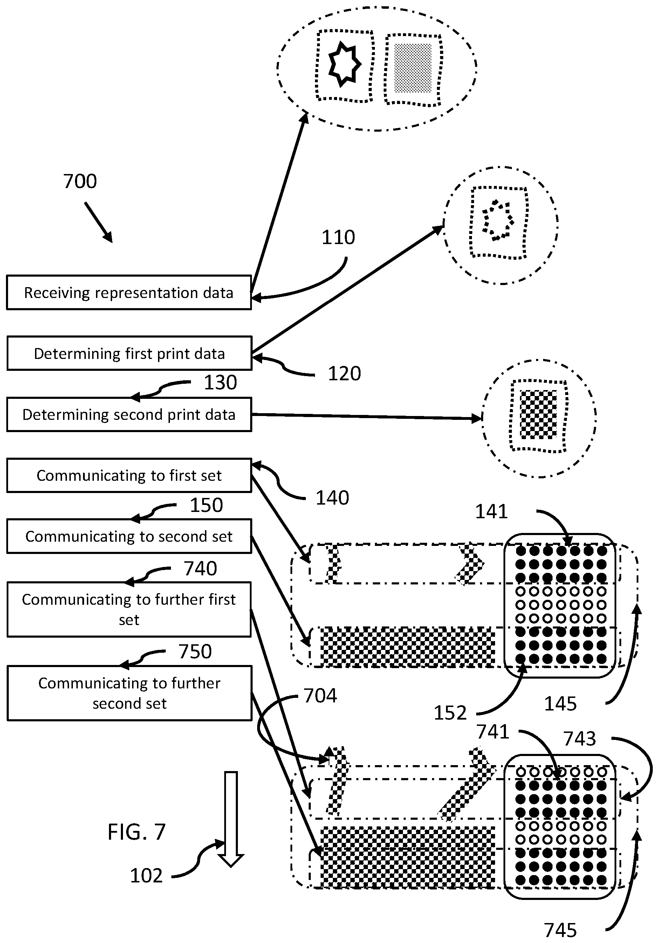

Figure 7 illustrates a further example printing method 700. Printing method 700 comprises blocks 110, 120, 130, 140 and 150 described in the context of Figure 1. While not illustrated here, method 700 could further comprise block 360 described in the context of Figure 3. While not illustrated here, method 700 could further comprise blocks 420, 430, 440 and 450 described in the context of Figure 4. While not illustrated here, method 700 could be operated using a bus such as bus 503 of Figure 5.

Printing method 700 further comprises, in block 740, communicating the first print data corresponding to a further specific swath 745 to a further first set 741 of nozzles and, in block 750, communicating the second print data corresponding to the further specific swath 745 to a further second set 152 of nozzles, whereby the further first and the further second set of nozzles are disjoint sets of nozzles from a same given die, whereby the further first set 741 of nozzles differs from the first set of nozzles. In this case, the further second set 152 of nozzles is the same as the second set of nozzles 152. In this representation, the further specific swath 745 is represented as closely following the specific swath 145, the media having advanced between swath 145 and 745 in the media advance direction of a distance 704. The relationship between swath 145 and 745 may be of the same nature as the relationship between swath 145 and 645 as discussed above in the context of Figure 6.

Again in Figure 7, the same first die is represented twice, on the top representing the print data corresponding to the specific swath 145, on the bottom representing the print data corresponding to the further specific swath 745, in addition to the result of printing the specific swath 145 and following a displacement of the media along direction 704 between the swaths 145 and 745.

As illustrated in Figure 7, the specific swath and the further specific swath operate using different first sets of nozzles. Such change may for example take place in function of desired changes in printing speed, image density, definition, nozzle health or quality. In Figure 7, the further first set of nozzles 741 is illustrated as black disks comprised in area 743 surrounded by a "dot-dashed" line encompassing the further first set of nozzles and the resulting print corresponding to swath 745. Using different first sets of nozzles as per this example method 700 may for example permit avoiding using a clogged nozzle.

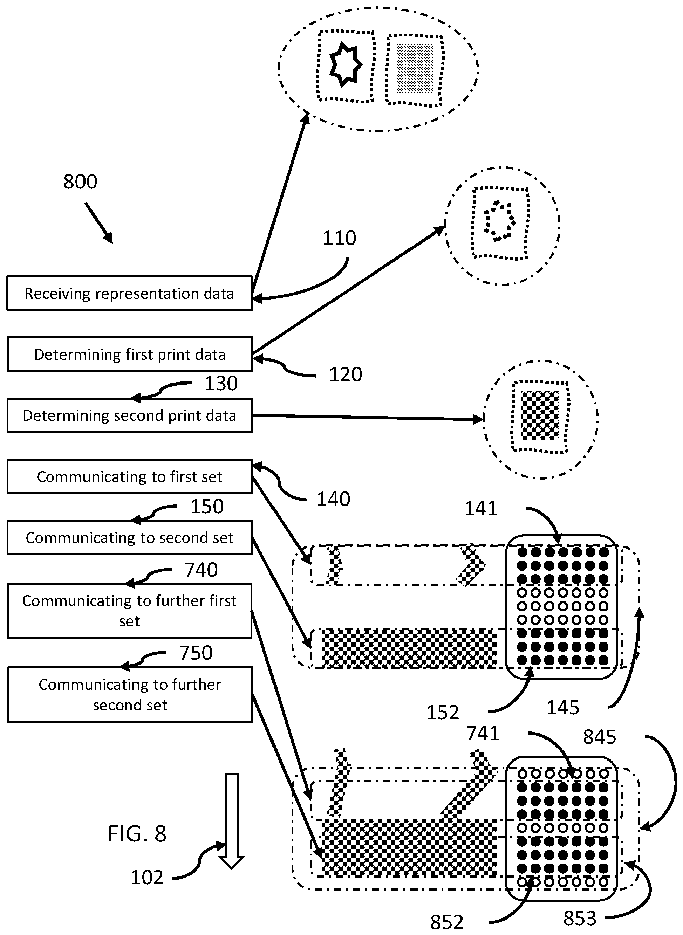

In Figure 8, a method 800 is illustrated, method 800 comprising blocks 110, 120, 130, 140, 150, 740 and 750 as described in the context of Figure 7. In example method 800, the further second set 852 of nozzles differs from the second set 152 of nozzles. The further second set 852 of nozzles is illustrated as black disks comprised in area 853 surrounded by a "dot-dashed" line encompassing the further second set of nozzles and the resulting print corresponding to swath 845. Such change may for example take place in function of printing speed, changes in image density, definition, nozzle health or quality. Using different second sets of nozzles as per this example method 800 may for example permit avoiding using a clogged nozzle.

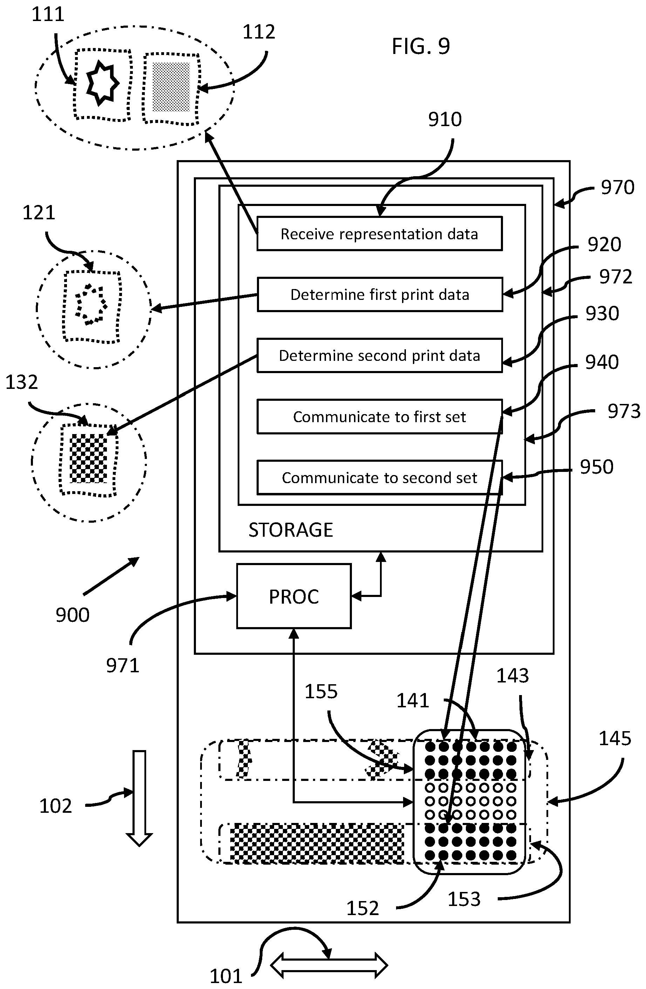

Figure 9 illustrates an example printer 900. A printer according to this disclosure should be understood as a printing device configured to process digital representation data to eject printing fluid through nozzles on a media to obtain a tangible representation of the digital representation. Example printers are thermal inkjet printers whereby nozzles are activated by a resistive element or piezo inkjet printers whereby nozzles are activated by a piezo element. Example printers comprise a scanning printhead, the printhead reciprocating along a printhead carriage axis as media advances along a media advance direction at an angle to the printhead carriage axis, the angle being for example of about 90 degrees, the printhead comprising one or more dies, each die carrying nozzles. The example printers hereby described are configured to operate according to any of the example methods hereby described.

Example printer 900 comprises a first printhead die such as example die 155 described in the context of the example methods.

Example printer 900 further comprises a printer controller 970. Example controller 970 comprises a processor 971 and a storage 972 coupled to the processor 971. In some examples, the controller may further comprise a network interface to receive data. In other examples, data may be provided locally, for example through a connector. Processor 971 may comprise electronic circuits for computation managed by an operating system. Example controller 970 further comprises an instruction set 973 to cooperate with the processor 971 and the storage 972.

Figure 9 thereby illustrates an example non-transitory machine-readable or computer readable storage medium, such as, for example, memory or storage 972, whereby the non-transitory machine-readable storage medium is encoded with instructions executable by a processor such as processor 971, the machine-readable storage medium comprising instructions to operate processor 971 to perform as per any of the example methods hereby described.

A computer readable storage, or storage according to this disclosure, may be any electronic, magnetic, optical or other physical storage device that stores executable instructions. The computer readable storage may be, for example, Random Access Memory (RAM), an Electrically Erasable Programmable Read Only Memory (EEPROM), a storage drive, and optical disk, and the like. As described hereby, the computer readable storage may be encoded with executable instructions implementing the printer controllers hereby described. Storage or memory may include any electronic, magnetic, optical or other physical storage device that stores executable instructions as described hereby.

The instruction set 973 is to cooperate with the processor 971 and the storage 972 to receive, as illustrated in block 910, first 111 and second 112 digital representation data for a respectively first and second image to be superposed on a same media side. The first and second digital representation data are as described in the context of the example method claims, in particular in the context of block 110. The superposition of the first and second image is to be understood as resulting from the superposition of printing fluid drops ejected by nozzles from nozzle sets as hereby described, such superposition of drops on the media leading to a superposition of the images.

The instruction set 973 is to cooperate with the processor 971 and the storage 972 to, as illustrated in block 920, determine first print data 121 corresponding to a first printing fluid for the first image on the basis of the first digital representation data. The first print data 121 is as described in the context of corresponding block 120 of the example method claims. The determination of such print data can for example result from printing pipeline operations such as halftoning, rasterizing or masking which permit translating source digital representation data 111 into data which may be processed for example by electronic circuits operating nozzles associated to a specific printing fluid such as the first printing fluid.

The instruction set 973 is to cooperate with the processor 971 and the storage 972 to, as illustrated in block 930, determine second print data 132 corresponding to the first printing fluid for the second image on the basis of the second digital representation data. The first print data 132 is as described in the context of corresponding block 130 of the example method claims. Again in this case, determination of such print data can for example result from printing pipeline operations such as halftoning, rasterizing or masking which permit translating source digital representation data 112 into data which may be processed for example by electronic circuits operating nozzles associated to a specific printing fluid such as the first printing fluid.

The instruction set 973 is to cooperate with the processor 971 and the storage 972 to, as illustrated in block 940, communicate the first print data corresponding to a given pass 145 of the first printhead die 155 to a first set of nozzles 141 fluidically connected to a first printing fluid. It should be understood that the given pass 145 is produced by movement from the die relative to the media along a printhead carriage axis 101 in a given direction, thereby producing a swath such as swath 145 described in the context of block 140. The first set of nozzles 141 is as described in the context of example method claims.

The instruction set 973 is to cooperate with the processor 971 and the storage 972 to, as illustrated in block 950, communicate the second print data 132 corresponding to the given pass 145 to a second set of nozzles 152 fluidically connected to the first printing fluid, whereby the first and the second set of nozzles pertain to the first printhead die 155 and whereby the first and the second set of nozzles respectively pertain to different first and second regions of the first printhead die along a printing direction.

The printing direction should be understood as a path corresponding to the ejection of printing fluid by the nozzles over time. A media advance direction 102 is a component of the printing direction between swaths or passes whereby successive passes or swaths follow each other in time and along the media advance direction 102. In a given pass or swath, a direction of travel of the die along the printhead carriage direction 101 also is a component of the printing direction within such pass or swath. Such printing direction is related to nozzle set configuration. The nozzle set configuration of Figures 2A and 2C for example correspond to a printing direction between swaths or passes, in other words along the media advance direction. The nozzle set configuration of Figure 2B for example corresponds to a printing direction withing a given swath or pass, in other words along the die movement direction during the swath or pass. The nozzle set configuration of Figure 2D corresponds to a printing direction combining both within a given swath or pass and between swaths or passes.

In some examples, the first set pertains to a first region of the printhead ahead from the second region corresponding to the second set. This is the case in die of Figure 2A, whereby media moving along direction 102 with first come across first set 201, then across set 202 along the printing direction (between swath), in this case along media advance direction. A similar situation is illustrated in Figure 2C, whereby first region 221 precedes second region 222, and first region 231 precedes second region 232 along a media advance direction 102.

In the example die of figure 2B, both the first and second regions are equivalently placed along the media advance direction. During printing of a given swath or pass however, the first region 211 precedes the second region 212 if the given swath or pass is produced by a movement of the die from right to left (defining the printing direction at the swath level) along direction 101, but the second region 212 precedes the first region 211 if the given swath or pass is produced by a movement of the die from left to right along direction 101.

In the example of Figure 2D, while the first region 241 precedes the second region 242 along the media advance direction 102, the situation can differ within a given swath or pass. If the die moves left to right, the first region 241 precedes the second region 242 during the given swath or pass. If the die moves right to left, the first region 241 follows the second region 242 during the given swath or pass.

As illustrated, the printing direction may not necessarily follow a straight line, but may follow a zigzagging line combining die movement within and between passes or swaths relative to the media. Such positioning of regions for the sets in relationship with the printing direction leads to obtaining the desired superposition of the first and second image. Different configurations may for example impact drying time between layers, whereby printing different layers onto a given media portion between different swaths may

As illustrated in Figure 9, example storage 972 is a non-transitory machine-readable storage medium encoded with instructions executable by the processor 971, the non-transitory machine-readable storage medium comprising:
instructions in line with block 910 or 110 to acquire first and second digital representation data for a first and a second digital representation to be printed on a same side of a same media;
instructions in line with block 920 or 120 to define first print data corresponding to a first printing fluid for the first digital representation on the basis of the first digital representation data;
instructions in line with block 930 or 130 to define second print data corresponding to the first printing fluid for the second digital representation on the basis of the second digital representation data;
instructions in line with block 940 or 140 to transmit the first print data corresponding to a specific swath to a first set 141 of nozzles; and
instructions in line with block 950 or 150 to transmit the second print data corresponding to the specific swath to a second set 152 of nozzles, whereby the first and the second set of nozzles are separate sets of nozzles along a printing direction such as, for example, a media advance direction, and are comprised in a same die 155.

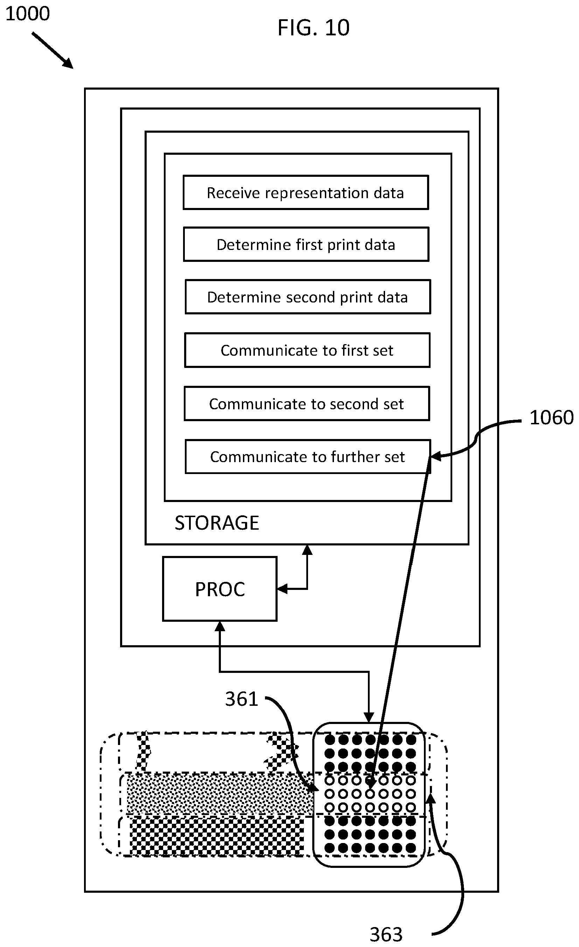

Figure 10 illustrates another example printer 1000. Such example printer comprises the elements already introduced in Figure 9 which were discussed above. Such elements are not numbered in Figure 10 to improve readability. In printer 1000, the instruction set is to further cooperate with the processor and the storage, as illustrated in block 1060, to communicate intermediate print data corresponding to the given pass to a further set of nozzles 361 fluidically connected to an intermediate printing fluid differing from the first printing fluid, whereby the further set of nozzles comprises nozzles pertaining to a further region located between the first and second regions of the first printhead die along the printing direction. The intermediate print data, further set of nozzles 361 and intermediate printing fluid are as described in the context of block 160.

In some examples, the further set of nozzles pertains to the first printhead die, as illustrated for example in Figure 10. Other examples of further sets of nozzles 363A which pertain to the first printhead die are illustrated in Figures 2B and 2D.

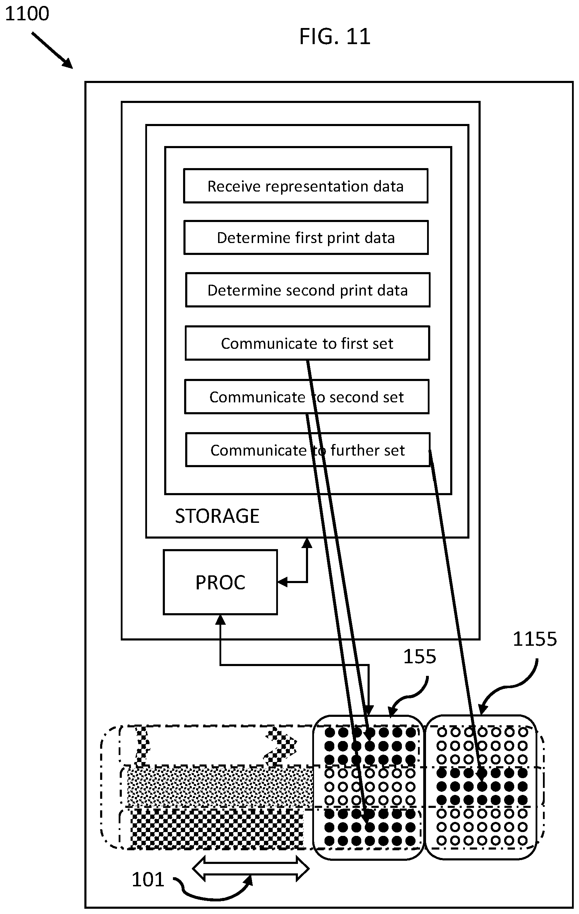

Figure 11 illustrates another example printer 1100. Such example printer comprises elements already introduced in Figure 10 which were discussed above. Such elements are not numbered in Figure 11 to improve readability. Printer 1100 further comprises a second printhead die 1155 adjacent to the first printhead die 155, whereby the further set of nozzles pertains to the second printhead die. In this example, the further set of nozzles is illustrated by black disks in die 1155. Such a configuration can for example avoid feeding different printing fluid into a same die. Adjacent dies are for example adjacent along a printhead carriage axis 101. While the adjacent dies are in Figure 11 represented as directly adjacent to each other, in other examples one or more additional dies may be present between the adjacent dies. Such one or more additional dies may for example permit operating the printer using one more additional printing fluids such as the second printing fluid discussed in the context of example method 400. In some configurations, a printhead comprises a plurality of adjacent dies along a direction 101 sharing a common die swath, each die being associated to a single specific printing fluid.

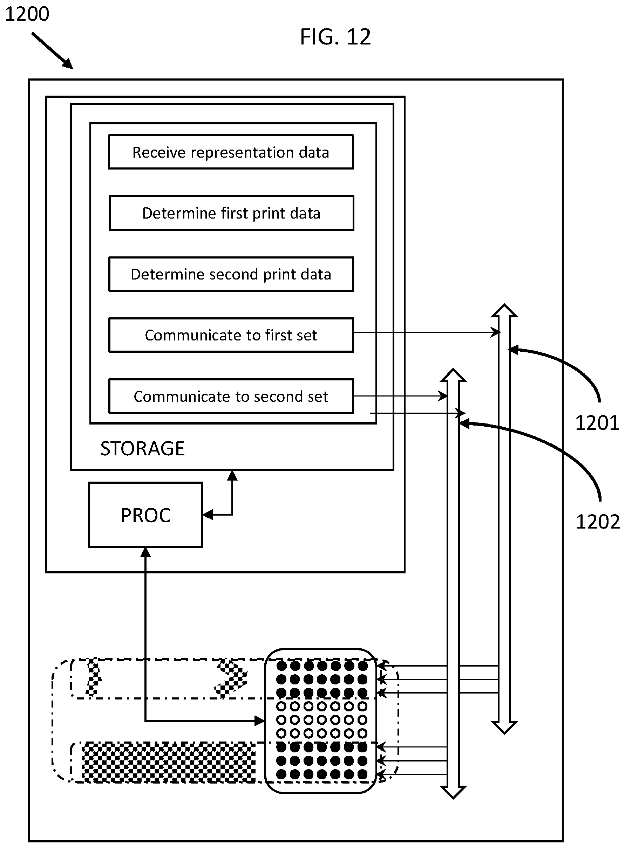

Figure 12 illustrates another example printer 1200. Such example printer comprises elements already introduced in Figure 10 which were discussed above. Such elements are not numbered in Figure 12 to improve readability. While not illustrated, printer 1200 may further comprise a second printhead die such as die 1155. Printer 1200 further comprises a first 1201 and a second 1202 communication bus for communicating the respective first and second print data to the respective corresponding nozzle sets between the controller and the first printhead die. In such a configuration, each digital representation benefits from a dedicated bus acting as a dedicated communication line, permitting increasing a data transmitting speed by adapting the example printer to operating the example methods hereby described.

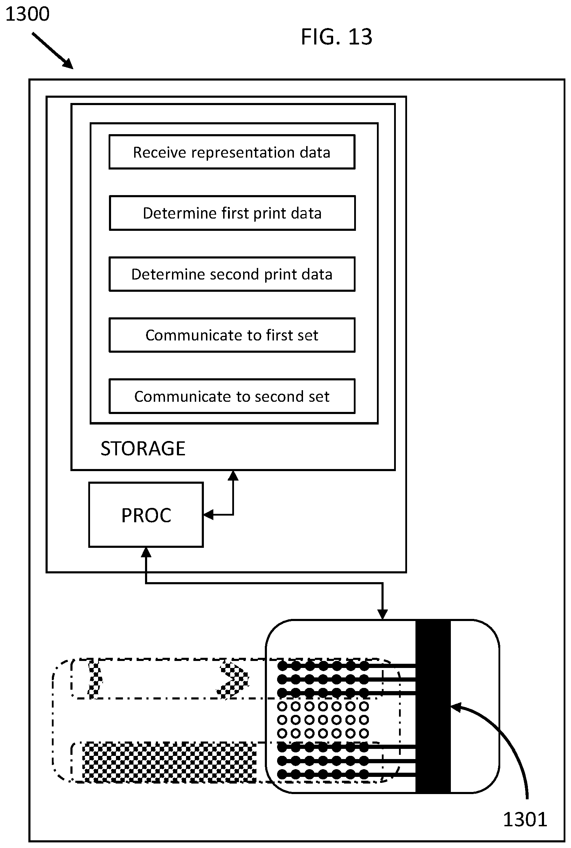

Figure 13 illustrates another example printer 1300. Such example printer comprises elements already introduced in Figure 10 which were discussed above. Such elements are not numbered in Figure 13 to improve readability. While not illustrated, printer 1300 may further comprise a second printhead die such as die 1155. While not illustrated, printer 1300 may further comprise a first 1201 and a second 1202 communication bus, or a same bus such as bus 503. In printer 1300, the first and the second set of nozzles share a same trench 1301 of the first printhead die for fluidic connection to the first printing fluid. A trench should be understood as a fluidic channel carrying the printing fluid from a reservoir to the nozzles. In some examples, the trench is comprised in a monolithic body forming the die, in particular in a monolithic silicon substrate forming the first printhead die. Using such a single trench for both first and second nozzle sets is efficient as far as die manufacture is concerned, while permitting printing a specific printing fluid component of a first and a second image simultaneously using the same die on a same surface of the same media. In some examples not illustrated here, the first and second nozzle sets may be fluidically connected to different trenches. In some examples not illustrated here, the nozzles from the first nozzle sets may be fluidically connected to different trenches. In some examples not illustrated here, the nozzles from the second nozzle sets may be fluidically connected to different trenches. In some examples, all nozzles from a same nozzle set are fluidically connected to a same trench. In some examples, a same trench shared by a first and a second set of nozzles according to this disclosure is treated by a controller of a printer as first and second virtual trenches in a nozzle data pointer addressing or nozzle firing process. In some examples, a same trench is processed in a controller of a printer as a plurality of virtual trenches, whereby each virtual trench corresponds to a respective nozzle set or subset according to this disclosure, such nozzle set or subset being in some example assigned by the controller of the printer a respective nozzle set or subset swath height.

## Claims

1. A printing method comprising:
receiving first and second digital representation data (111, 112) for a first and a second digital representation to be printed on a same side of a same media;
determining first print data (121) corresponding to a first printing fluid for the first digital representation on the basis of the first digital representation data;
determining second print data (132) corresponding to the first printing fluid for the second digital representation on the basis of the second digital representation data;
communicating the first print data corresponding to a specific swath to a first set of nozzles fluidically connected to the first printing fluid;
**characterised in that** the printing method further comprises:
communicating the second print data corresponding to the specific swath to a second set of nozzles fluidically connected to the first printing fluid, whereby the first and the second set of nozzles are disjoint sets of nozzles from a same first die.

2. The method in accordance with claim 1, further comprising:
communicating intermediate print data corresponding to the specific swath to a further set of nozzles fluidically connected to an intermediate printing fluid differing from the first printing fluid, whereby the intermediate print data corresponds to a layer to be printed between the first and second digital representations.

3. The method in accordance with claim 2, whereby the intermediate printing fluid is a white ink.

4. The method in accordance with claim 1, further comprising:
determining third print data corresponding to a second printing fluid for the first digital representation on the basis of the first digital representation data, whereby the second printing fluid differs from the first printing fluid;
determining fourth print data corresponding to the second printing fluid for the second digital representation on the basis of the second digital representation data;
communicating the third print data corresponding to the specific swath to a third set of nozzles fluidically connected to the second printing fluid; and
communicating the fourth print data corresponding to the specific swath to a fourth set of nozzles fluidically connected to the second printing fluid, whereby the third and the fourth set of nozzles are disjoint sets of nozzles from a same second die.

5. The method in accordance with claim 1, further comprising communicating the first and second print data using a same communication bus.

6. The method in accordance with claim 1, further comprising:
communicating the first print data corresponding to a further specific swath to the first set of nozzles; and
communicating the second print data corresponding to the further specific swath to the second set of nozzles.

7. The method in accordance with claim 1, further comprising:
communicating the first print data corresponding to a further specific swath to a further first set of nozzles; and
communicating the second print data corresponding to the further specific swath to a further second set of nozzles, whereby the further first and the further second set of nozzles are disjoint sets of nozzles from a same given die, whereby the further first set of nozzles differs from the first set of nozzles.

8. The method in accordance with claim 7, whereby the further second set of nozzles differs from the second set of nozzles.

9. A printer (900) comprising:
a first printhead die (155);
a printer controller (970) comprising a processor and a storage coupled to the processor; and
an instruction set configured to cooperate with the processor and the storage to:
receive first and second digital representation data (111, 112) for a respectively first and second image to be superposed on a same media side;
determine first print data (121) corresponding to a first printing fluid for the first image on the basis of the first digital representation data;
determine second print data (132) corresponding to the first printing fluid for the second image on the basis of the second digital representation data;
communicate the first print data corresponding to a given pass of the first printhead die to a first set of nozzles fluidically connected to a first printing fluid;
**characterised in that** the instruction set is further configured to:
communicate the second print data corresponding to the given pass to a second set of nozzles fluidically connected to the first printing fluid, whereby the first and the second set of nozzles pertain to the first printhead die and whereby the first and the second set of nozzles respectively pertain to different first and second regions of the first printhead die along a printing direction.

10. The printer in accordance with claim 9, whereby the instruction set is to further cooperate with the processor and the storage to communicate intermediate print data corresponding to the given pass to a further set of nozzles fluidically connected to an intermediate printing fluid differing from the first printing fluid, whereby the further set of nozzles comprises nozzles pertaining to a further region located between the first and second regions of the first printhead die along the printing direction.

11. The printer in accordance with claim 10, wherein the further set of nozzles pertains to the first printhead die.

12. The printer in accordance with claim 10, wherein the printer comprises a second printhead die adjacent to the first printhead die, whereby the further set of nozzles pertains to the second printhead die.

13. The printer in accordance with claim 9, wherein the printer comprises a first and a second communication bus for communicating the respective first and second print data between the controller and the first printhead die.

14. The printer in accordance with claim 9, wherein the first and the second set of nozzles share a same trench of the first printhead die for fluidic connection to the first printing fluid.

15. A non-transitory machine-readable storage medium encoded with instructions executable by a processor, the non-transitory machine-readable storage medium comprising:
instructions to acquire first and second digital representation data (111, 112) for a first and a second digital representation to be printed on a same side of a same media;
instructions to define first print data (121) corresponding to a first printing fluid for the first digital representation on the basis of the first digital representation data;
instructions to define second print data (132) corresponding to the first printing fluid for the second digital representation on the basis of the second digital representation data;
instructions to transmit the first print data corresponding to a specific swath to a first set of nozzles;
**characterised in that** the non-transitory machine-readable storage medium further comprises:
instructions to transmit the second print data corresponding to the specific swath to a second set of nozzles, whereby the first and the second set of nozzles are separate sets of nozzles along a media advance direction and are comprised in a same die.

## Patentansprüche

1. Druckverfahren, das umfasst:
Empfangen von ersten und zweiten digitalen Darstellungsdaten (111, 112) für eine erste und eine zweite digitale Darstellung, die auf derselben Seite desselben Mediums zu drucken sind;
Bestimmen von ersten Druckdaten (121), die einem ersten Druckfluid für die erste digitale Darstellung entsprechen, auf der Basis der ersten digitalen Darstellungsdaten;
Bestimmen von zweiten Druckdaten (132), die dem ersten Druckfluid für die zweite digitale Darstellung entsprechen, auf der Basis der zweiten digitalen Darstellungsdaten;
Übermitteln der ersten Druckdaten, die einem spezifischen Schwaden entsprechen, an einen ersten Satz von Düsen, die mit dem ersten Druckfluid fluidisch verbunden sind;
**dadurch gekennzeichnet, dass** das Druckverfahren ferner umfasst:
Übermitteln der zweiten Druckdaten, die dem spezifischen Schwaden entsprechen, an einen zweiten Satz von Düsen, die mit dem ersten Druckfluid fluidisch verbunden sind, wobei der erste und der zweite Satz von Düsen unzusammenhängende Sätze von Düsen von derselben ersten Matrize sind.

2. Verfahren nach Anspruch 1, das ferner umfasst:
Übermitteln von Zwischendruckdaten, die dem spezifischen Schwaden entsprechen, an einen weiteren Satz von Düsen, die mit einem Zwischendruckfluid fluidisch verbunden sind, das sich von dem ersten Druckfluid unterscheidet, wobei die Zwischendruckdaten einer Schicht entsprechen, die zwischen der ersten und zweiten digitalen Darstellung zu drucken ist.

3. Verfahren nach Anspruch 2, wobei das Zwischendruckfluid eine weiße Tinte ist.

4. Verfahren nach Anspruch 1, das ferner umfasst:
Bestimmen von dritten Druckdaten, die einem zweiten Druckfluid für die erste digitale Darstellung entsprechen, auf der Basis der ersten digitalen Darstellungsdaten, wobei sich das zweite Druckfluid von dem ersten Druckfluid unterscheidet;
Bestimmen von vierten Druckdaten, die dem zweiten Druckfluid für die zweite digitale Darstellung entsprechen, auf der Basis der zweiten digitalen Darstellungsdaten;
Übermitteln der dritten Druckdaten, die dem spezifischen Schwaden entsprechen, an einen dritten Satz von Düsen, die mit dem zweiten Druckfluid fluidisch verbunden sind; und
Übermitteln der vierten Druckdaten, die dem spezifischen Schwaden entsprechen, an einen vierten Satz von Düsen, die mit dem zweiten Druckfluid fluidisch verbunden sind, wobei der dritte und der vierte Satz von Düsen unzusammenhängende Sätze von Düsen von derselben zweiten Matrize sind.

5. Verfahren nach Anspruch 1, das ferner ein Übermitteln der ersten und der zweiten Druckdaten unter Verwendung desselben An-/Aus-Schalters umfasst.

6. Verfahren nach Anspruch 1, das ferner umfasst: Übermitteln der ersten Druckdaten, die einem weiteren spezifischen Schwaden entsprechen, an den ersten Satz von Düsen; und
Übermitteln der zweiten Druckdaten, die dem weiteren spezifischen Schwaden entsprechen, an den zweiten Satz von Düsen.

7. Verfahren nach Anspruch 1, das ferner umfasst:
Übermitteln der ersten Druckdaten, die einem weiteren spezifischen Schwaden entsprechen, an einen weiteren ersten Satz von Düsen; und
Übermitteln der zweiten Druckdaten, die dem weiteren spezifischen Schwaden entsprechen, an einen weiteren zweiten Satz von Düsen, wobei der weitere erste und der weitere zweite Satz von Düsen unzusammenhängende Sätze von Düsen von derselben gegebenen Matrize sind, wobei sich der weitere erste Satz von Düsen von dem ersten Satz von Düsen unterscheidet.

8. Verfahren nach Anspruch 7, wobei sich der weitere zweite Satz von Düsen von dem zweiten Satz von Düsen unterscheidet.

9. Drucker (900), der umfasst:
eine Druckkopfprägeplatte (155);
einen Drucker-Controller (970), der einen Prozessor und einen an den Prozessor gekoppelten Speicher umfasst; und
ein Anweisungssatz, der dazu konfiguriert ist, mit dem Prozessor und dem Speicher zusammenzuwirken zum:
Empfangen von ersten und zweiten digitalen Darstellungsdaten (111, 112) für ein jeweils erstes und zweites Bild, die auf derselben Medienseite zu überlagern sind;
Bestimmen von ersten Druckdaten (121), die einem ersten Druckfluid für das erste Bild auf der Basis der ersten digitalen Darstellungsdaten entsprechen;
Bestimmen von zweiten Druckdaten (132), die dem ersten Druckfluid für das zweite Bild auf der Basis der zweiten digitalen Darstellungsdaten entsprechen;
Übermitteln der ersten Druckdaten, die einem gegebenen Durchgang der ersten Druckkopfprägeplatte entsprechen, an einen ersten Satz von Düsen, die mit einem ersten Druckfluid fluidisch verbunden sind;
**dadurch gekennzeichnet, dass** der Controller ferner konfiguriert ist zum:
Übermitteln der zweiten Druckdaten, die dem gegebenen Durchgang entsprechen, an einen zweiten Satz von Düsen, die mit dem ersten Druckfluid fluidisch verbunden sind, wobei der erste und der zweite Satz von Düsen zu der ersten Druckkopfprägeplatte gehören und wobei der erste und der zweite Satz von Düsen jeweils zu unterschiedlichen ersten und zweiten Regionen der ersten Druckkopfprägeplatte entlang einer Druckrichtung gehören.

10. Drucker nach Anspruch 9, wobei der Anweisungssatz ferner dazu dient, mit dem Prozessor und dem Speicher zusammenzuwirken, um Zwischendruckdaten, die dem gegebenen Durchgang entsprechen, an einen weiteren Satz von Düsen zu übermitteln, die mit einem Zwischendruckfluid fluidisch verbunden sind, das sich von dem ersten Druckfluid unterscheidet, wobei der weitere Satz von Düsen Düsen umfasst, die zu einer weiteren Region gehören, die sich zwischen der ersten und der zweiten Region der ersten Druckkopfprägeplatte entlang der Druckrichtung befindet.

11. Drucker nach Anspruch 10, wobei der weitere Satz von Düsen zu der ersten Druckkopfprägeplatte gehört.

12. Drucker nach Anspruch 10, wobei der Drucker eine zweite Druckkopfprägeplatte, angrenzend an die erste Druckkopfprägeplatte, umfasst, wobei der weitere Satz von Düsen zu der zweiten Druckkopfprägeplatte gehört.

13. Drucker nach Anspruch 9, wobei der Drucker einen ersten und einen zweiten An-/Aus-Schalter zum Übermitteln der jeweiligen ersten und zweiten Druckdaten zwischen dem Controller und der ersten Druckkopfprägeplatte umfasst.

14. Drucker nach Anspruch 9, wobei der erste und der zweite Satz von Düsen dieselbe Vertiefung der ersten Druckkopfprägeplatte für eine fluidische Verbindung mit dem ersten Druckfluid teilen.

15. Nichtflüchtiges maschinenlesbares Speichermedium, das mit Anweisungen codiert ist, die durch einen Prozessor ausführbar sind, wobei das nichtflüchtige maschinenlesbare Speichermedium umfasst:
Anweisungen, um erste und zweite digitale Darstellungsdaten (111, 112) für eine erste und eine zweite digitale Darstellung zu erfassen, die auf derselben Seite desselben Mediums zu drucken sind;
Anweisungen, um erste Druckdaten (121), die einem ersten Druckfluid für die erste digitale Darstellung entsprechen, auf der Basis der ersten digitalen Darstellungsdaten zu definieren;
Anweisungen, um zweite Druckdaten (132), die einem ersten Druckfluid für die zweite digitale Darstellung entsprechen, auf der Basis der zweiten digitalen Darstellungsdaten zu definieren;
Anweisungen, um die ersten Druckdaten, die einem spezifischen Schwaden entsprechen, an einen ersten Satz von Düsen zu übertragen;
**dadurch gekennzeichnet, dass** das nichtflüchtige maschinenlesbare Speichermedium ferner umfasst:
Anweisungen, um die zweiten Druckdaten, die dem spezifischen Schwaden entsprechen, an einen zweiten Satz von Düsen zu übertragen, wobei der erste und der zweite Satz von Düsen getrennte Sätze von Düsen entlang einer Medienvorschubrichtung sind und in derselben Matrize enthalten sind.

## Revendications

1. Procédé d'impression comprenant :
la réception de premières et secondes données de représentation numérique (111, 112) pour une première et une seconde représentation numérique à imprimer sur un même côté d'un même support ;
la détermination de premières données d'impression (121) correspondant à un premier fluide d'impression pour la première représentation numérique sur la base des premières données de représentation numérique ;
la détermination de deuxièmes données d'impression (132) correspondant au premier fluide d'impression pour la seconde représentation numérique sur la base des secondes données de représentation numérique ;
la communication des premières données d'impression correspondant à une bande spécifique à un premier ensemble de buses reliées fluidiquement au premier fluide d'impression ;
**caractérisé en ce que** le procédé d'impression comprend en outre :
la communication des deuxièmes données d'impression correspondant à la bande spécifique à un deuxième ensemble de buses reliées fluidiquement au premier fluide d'impression, moyennant quoi le premier et le deuxième ensemble de buses sont des ensembles disjoints de buses provenant d'une même première matrice.

2. Procédé selon la revendication 1, comprenant en outre :
la communication de données d'impression intermédiaires correspondant à la bande spécifique à un ensemble supplémentaire de buses reliées fluidiquement à un fluide d'impression intermédiaire différent du premier fluide d'impression, moyennant quoi les données d'impression intermédiaires correspondent à une couche à imprimer entre les première et seconde représentations numériques.

3. Procédé selon la revendication 2, moyennant quoi le fluide d'impression intermédiaire est une encre blanche.

4. Procédé selon la revendication 1, comprenant en outre :
la détermination de troisièmes données d'impression correspondant à un second fluide d'impression pour la première représentation numérique sur la base des premières données de représentation numérique, moyennant quoi le second fluide d'impression diffère du premier fluide d'impression ;
la détermination de quatrièmes données d'impression correspondant au second fluide d'impression pour la seconde représentation numérique sur la base des secondes données de représentation numérique ;
la communication des troisièmes données d'impression correspondant à la bande spécifique à un troisième ensemble de buses reliées fluidiquement au second fluide d'impression ; et
la communication des quatrièmes données d'impression correspondant à la bande spécifique à un quatrième ensemble de buses reliées fluidiquement au second fluide d'impression, moyennant quoi le troisième et le quatrième ensemble de buses sont des ensembles disjoints de buses provenant d'une même seconde matrice.

5. Procédé selon la revendication 1, comprenant en outre la communication des première et deuxième données d'impression à l'aide d'un même bus de communication.

6. Procédé selon la revendication 1, comprenant en outre :
la communication des premières données d'impression correspondant à une bande spécifique supplémentaire au premier ensemble de buses ; et
la communication des deuxièmes données d'impression correspondant à la bande spécifique supplémentaire au deuxième ensemble de buses.

7. Procédé selon la revendication 1, comprenant en outre :
la communication des premières données d'impression correspondant à une bande spécifique supplémentaire à un premier ensemble supplémentaire de buses ; et
la communication des deuxièmes données d'impression correspondant à la bande spécifique supplémentaire à un deuxième ensemble supplémentaire de buses, moyennant quoi le premier ensemble supplémentaire et le deuxième ensemble supplémentaire de buses sont des ensembles disjoints de buses provenant d'une même matrice donnée, moyennant quoi le premier ensemble supplémentaire de buses diffère du premier ensemble de buses.

8. Procédé selon la revendication 7, selon lequel le deuxième ensemble supplémentaire de buses diffère du deuxième ensemble de buses.

9. Imprimante (900) comprenant :
une première matrice de tête d'impression (155) ;
un dispositif de commande d'imprimante (970) comprenant un processeur et une unité de stockage couplée au processeur ; et
un ensemble d'instructions configuré pour coopérer avec le processeur et l'unité de stockage pour :
recevoir des premières et secondes données de représentation numérique (111, 112) pour respectivement une première et une seconde image à superposer sur un même côté support ;
déterminer des premières données d'impression (121) correspondant à un premier fluide d'impression pour la première image sur la base des premières données de représentation numérique ;
déterminer des deuxièmes données d'impression (132) correspondant au premier fluide d'impression pour la seconde image sur la base des secondes données de représentation numérique ;
communiquer les premières données d'impression correspondant à un passage donné de la première matrice de tête d'impression à un premier ensemble de buses reliées fluidiquement à un premier fluide d'impression ;
**caractérisé en ce que** l'ensemble d'instructions est en outre configuré pour :
communiquer les deuxièmes données d'impression correspondant à la passe donnée à un deuxième ensemble de buses reliées fluidiquement au premier fluide d'impression, moyennant quoi le premier et le deuxième ensemble de buses appartiennent à la première matrice de tête d'impression et moyennant quoi le premier et le deuxième ensemble de buses appartiennent respectivement à différentes première et seconde régions de la première matrice de tête d'impression le long d'une direction d'impression.

10. Imprimante selon la revendication 9, moyennant quoi l'ensemble d'instructions doit coopérer en outre avec le processeur et l'unité de stockage pour communiquer des données d'impression intermédiaires correspondant à la passe donnée à un ensemble supplémentaire de buses reliées fluidiquement à un fluide d'impression intermédiaire différent du premier fluide d'impression, moyennant quoi l'ensemble supplémentaire de buses comprend des buses appartenant à une région supplémentaire située entre les première et seconde régions de la première matrice de la tête d'impression le long de la direction d'impression.

11. Imprimante selon la revendication 10, dans laquelle l'ensemble supplémentaire de buses appartient à la première matrice de tête d'impression.

12. Imprimante selon la revendication 10, dans laquelle l'imprimante comprend une seconde matrice de tête d'impression adjacente à la première matrice de tête d'impression, moyennant quoi l'ensemble supplémentaire de buses appartient à la seconde matrice de tête d'impression.

13. Imprimante selon la revendication 9, dans laquelle l'imprimante comprend un premier et un second bus de communication permettant de communiquer les première et deuxième données d'impression respectives entre le dispositif de commande et la première matrice de tête d'impression.

14. Imprimante selon la revendication 9, dans laquelle le premier et le deuxième ensemble de buses partagent une même tranchée de la première matrice de tête d'impression pour la liaison fluidique au premier fluide d'impression.

15. Support de stockage non transitoire lisible par machine codé avec des instructions exécutables par un processeur, le support de stockage non transitoire lisible par machine comprenant :
des instructions pour acquérir des premières et secondes données de représentation numérique (111, 112) pour une première et une seconde représentation numérique à imprimer sur un même côté d'un même support ;
des instructions pour définir des premières données d'impression (121) correspondant à un premier fluide d'impression pour la première représentation numérique sur la base des premières données de représentation numérique ;
des instructions pour définir des deuxièmes données d'impression (132) correspondant au premier fluide d'impression pour la seconde représentation numérique sur la base des secondes données de représentation numérique ;
des instructions pour transmettre les premières données d'impression correspondant à une bande spécifique à un premier ensemble de buses ;
**caractérisé en ce que** le support de stockage lisible par machine non transitoire comprend en outre :
des instructions pour transmettre les deuxièmes données d'impression correspondant à la bande spécifique à un deuxième ensemble de buses, moyennant quoi le premier et le deuxième ensemble de buses sont des ensembles séparés de buses le long d'une direction d'avance de support et sont compris dans une même matrice.
